(19) Europäisches Patentamt
European Patent Office
Office européen des brevets

(11) **EP 3 252 627 A1**

(12) **EUROPEAN PATENT APPLICATION**

(43) Date of publication:
**06.12.2017 Bulletin 2017/49**

(51) Int Cl.:
***G06F 17/50*** (2006.01)  ***G01N 3/00*** (2006.01)
***B23K 11/11*** (2006.01)

(21) Application number: **16382250.5**

(22) Date of filing: **02.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Seat, S.A.**
**08760 Martorell (ES)**

(72) Inventors:
• **DORRIBO DORRIBO, Daniel**
**08760 Martorell (ES)**

• **LARRÁYOZ IZCARA, Xabier**
**08760 Martorell (ES)**
• **CASTILLO GONZÁLEZ, Xavier**
**08760 Martorell (ES)**

(74) Representative: **Isern-Jara, Nuria**
**Avda. Diagonal 463 Bis 2°**
**08036 Barcelona (ES)**

Remarks:
In accordance with Article 14(2), second sentence EPC the applicant has filed a text with which it is intended to bring the translation into conformity with the original text of the application.

(54) **SPOT WELD FRACTURE CALCULATION METHOD AND DEVICE FOR HIGH-STRENGTH STEELS**

(57) Spot weld fracture calculation method for high-strength steels, which comprises the steps of entering in a processing unit the at least certain mechanical properties of sheets (1, 2) of steel; modelling said sheets (1, 2) of steel and the at least one spot weld (3) by means of finite elements (61); applying boundary conditions of the at least one load (4) and at least one movement restriction; assigning a mechanical behaviour of the model of finite elements (61); a first calculation step for determining strains, stresses and displacements of the nodes; a second calculation step for determining the J-integral in at least one critical zone; storing J-integral values and judging a possibility of fracture of the at least one spot weld (3), thereby characterizing the maximum force that the welded joins are able to withstand.

FIG. 3B

EP 3 252 627 A1

**Description**

SUBJECT OF THE INVENTION

The subject matter of the present patent application is a spot weld fracture calculation method for advanced high strength steels according to Claim 1, which incorporates notable innovations and advantages.

BACKGROUND OF THE INVENTION

Various spot weld fracture calculation methods for steels are currently known.

Specifically, the prior art discloses, as reflected in document EP1742033, a fracture prediction device for a spot welded part that includes a data input of one of the totality or any from amongst a strength of the material, a thickness of the plate, a diameter of the spot weld, a sheet thickness at the join, and an angle of load of the join obtained in a strain test, on the basis of a cross tension test and/or a shear tension test at a spot welded join. It further includes a calculation means for calculating a parameter of resistance to fracture of the spot welded portion on the basis of one of the totality or any from amongst the strength of the material, the thickness of the plate, the diameter of the spot weld, the sheet thickness at the join and the angle of load of the join obtained in the strain test. Furthermore, it applies a step of storage of the parameter of resistance to fracture for each type of steel. The patent discloses a calculation designed to evaluate a fraction of the welded part by means of the inclusion of the parameter of resistance to fracture stored in the parameter memory, which translates into a fracture prediction formula in which a stress at a periphery of the spot weld is modelled by means of a method of finite elements.

The prior art further teaches, as reflected in document EP1777509, a spot weld fracture analysis method for a spot weld portion of three or more superposed plates welded by a common spot weld. It comprises a step of analysis by means of the use of a model of finite elements in which each plate is modelled by shell-type elements. Said elements are joined by means of a bar that models a spot weld. The result of the analysis is prediction of the possibility of fracture of a spot weld between an intermediate sheet and an adjacent sheet.

However, the teachings disclosed in the prior art documents cannot be used to simulate the behaviour of a spot weld in advanced high strength steels. They are designed to simulate the behaviour of the spot welds in the case of ductile steels (by way of example, those which comprise an Rp < 800 MPa). The prior art documents cited model the spot weld that joins the at least two metal panels as a sufficiently rigid element. In this way, if a significant force were applied fracture of the base material would occur. Thus, the simulations evaluate the fracture owing to the low strength of the base materials and not on account of the actual spot weld. Thus, according to the prior art disclosed, the spot weld is a rigid element that does not fracture (in fact, in the simulations it is characterized as the strongest element).

Yet, in the case of advanced high strength steels (AHSS), the mechanical properties of the base material are greater than those of the actual spot weld, and therefore the weakest zones are at the notch tip or thermally affected zone of the spot weld. It should be pointed out that "notch tip" is understood to mean the zone close to the spot weld where there is the transition from the two separate sheets to two sheets joined by the actual spot weld.

Real tests are currently carried out in order to obtain maximum forces. Thus, the tests are carried out only for a series of cases, without covering the entire range of values of the different variables. The rest of the results are interpolated, given that the characterization of the entire test matrix necessary for each new material is long and costly.

Thus, it will be seen that there is still a need for a spot weld fracture calculation method for advanced high strength steels, for the purpose of characterizing the maximum force that the spot welded joins between sheets of advanced high strength steel are able to withstand as a function of various factors. Said maximum force or limit value is applied in the dynamic shock simulation models employed in bodywork simulation departments in the automotive sector.

DESCRIPTION OF THE INVENTION

The method of the present invention proposes calculating the maximum force that a spot welded join is capable of withstanding, as a function of the applied load angle, the combination of thicknesses of sheet and material, and the spot weld diameter.

To that end, a mesh of finite elements is created, which describes in detail the geometry of the spot and, together with the maps of material of the various zones, make it possible to prepare a calculation for resolution thereof with finite element simulation software. It should be pointed out that such maps of material have to be entered by the user.

Once the calculation has been made, an automatic process is subsequently implemented whereby the final result of maximum force is obtained. In said subsequent process, an evaluation is made of the speed of dissipation of stress energy or work performed in order to open a fractured surface unit (by means of a variable J-integral) accumulated at the notch tip which produces the fracture at the spot weld in this type of steels. When said speed of dissipation of energy exceeds a material-dependent maximum value, the spot is considered to have failed.

The entire process described takes place automatically, and the only information to be entered comprises the mechanical properties of the material, the combination of thicknesses, the diameter of the spot weld and the critical value of J-integral for this applied load case.

Currently, the method of the present invention and the electronic device on which it is implemented are developed and valuated in order to calibrate the maximum forces that the test specimens used withstand in order to calibrate the simplified models used at the present time in complete vehicle models. It is envisaged that at a future date this can be extended to models of more complex pieces.

More specifically, the tool, the latter being understood to mean the method and the electronic device on which it is implemented, is developed for the evaluation of a possibility of fracture in high-strength steels, there being no sense in its application to low-strength steels. Examples of high-strength steels would be martensitic boron steels or 22MnB5 steels.

Thus, the spot weld fracture calculation method for high-strength steels, wherein a first sheet of steel with certain first mechanical properties is joined to at least one second sheet of steel with certain second mechanical properties by means of at least one spot weld, wherein the at least one spot weld is subject to at least one load, comprises the steps of:

a) entering in a processing unit the at least certain mechanical properties of the first sheet of steel, the at least certain second mechanical properties of the second sheet of steel, certain thicknesses of the first and the at least one second sheet of steel, a diameter of the at least one spot weld and an angle of application of the at least one load,
b) modelling the first sheet of steel, the at least one second sheet of steel and the at least one spot weld by means of finite elements,
c) applying boundary conditions on the model of finite elements, wherein the boundary conditions are the at least one load and at least one restriction of movement,
d) assigning a mechanical behaviour of the model of finite elements,
e) a first calculation step for determining certain strains of the finite elements, certain stresses of the finite elements and the displacements of the nodes, a force curve of the first sheet, second sheet and at least one spot weld assembly, and a displacement of the first sheet, second sheet and at least one spot weld assembly,
f) a second calculation step for determining the J-integral in at least one critical zone of the model of finite elements on the basis of the results obtained in the first calculation step,
g) storing J-integral values obtained in the second calculation step in a memory unit, and
h) judging a possibility of fracture of the at least one spot weld on the basis of the stored J-integral values and a previously known maximum J-integral value.

By means of the application of said method, a reduction is achieved in the implementation of a matrix of tests for characterizing spot weld fracture, immediate results are obtained when a new combination of thicknesses is to be introduced for new calculations, and it makes it possible to ascertain whether a real spot with a smaller diameter, in line with projections, is capable of withstanding the necessary force of an impact.

It should be mentioned that modelling a steel sheet is understood to mean producing a mesh of finite elements of the at least one zone under study in said steel sheet.

Said advantages are achieved by means of the calculation of the J-integral, which represents the form of calculation of the energy dissipated during a fracture or the energy per fractured surface unit.

It should once again be stated that in more ductile steels (Rp < 0.8 GPA), joined by spot welds, said spot weld was the strongest element, and therefore did not fracture in this zone. However, in the case of advanced high strength steels, the fracture occurs at the spot weld or fusion zone. This is so because upon producing the weld a geometric notch tip is generated that, when there is a strain or shear force, opens and gives rise to the fracture of the spot weld. Crack or notch tip is understood to mean the zone of transition from the two separate sheets to two joined sheets. In the event of a strain or shear force, forces concentrate in said zone. In order to predict the opening up of cracks or notch tips, customary models of material fracture strain or stress cannot be used since the strain and stress fields close to the crack have a very high gradient and therefore the finite element solution is very imprecise and the fracture is very dependent on the mesh (size and form). The use of a critical J-integral, the variable used conventionally for crack opening problems in fracture mechanics, is proposed as an alternative. By calculating the J-integral at the crack, the energy that would be released in the crack is determined.

Thus, and in a preferred embodiment of the invention, the first sheet of steel is joined to a second sheet of steel by means of at least one spot weld.

It should be pointed out that the method may be applied for the calculation with two or more sheets, although it is developed for spot welds that join two sheets, given that current technologies are not effective in "structural" three-sheet welds. The case may arise in which two structural sheets plus one cosmetic sheet are joined, but in these cases there is not a great deal of sense in performing a simulation of this type since the join would fracture via the sheet of the base material of the cosmetic sheet given that that is the sheet that would have the poorest mechanical properties of the assembly overall. Structural sheet is understood to mean a metal sheet having a width typically between 1.0 and 2.0 mm. Its function is to confer mechanical properties and stiffness on the assembly. Cosmetic sheet is understood to mean a metal sheet having a thickness typically between 0.5 and 0.8 mm. Its function is aesthetic. These structural sheets of large thicknesses and in high-strength steels have mechanical properties that stand out as compared with a cosmetic sheet of steel. It is therefore obvious that, in the case of notable mechanical stresses, the fracture zone would be at the base material of the cosmetic sheet, the at least one spot weld and the structural sheets being seen not to suffer significant stresses.

According to another aspect of the invention, the step of assigning a mechanical behaviour of the model of finite elements comprises a previous step of segmenting the at least one spot weld into at least a first base material of the first sheet of steel, a second base material of the second sheet of steel, a first thermally affected zone of the first sheet, a second thermally affected zone of the second sheet and a fusion zone. Said segmentation makes it possible for the method of the invention to provide greater precision in the calculations.

It should be stated that, specifically, the base material would be the metal plate not thermally affected by the production of the spot weld. It has the unaltered mechanical properties of the high-strength steel used. The thermally affected zone is a zone surrounding the spot weld which has been thermally affected but where complete fusion has not occurred. It therefore surrounds the spot weld and has particular mechanical properties. Lastly, the fusion zone arises from the fusion of the material owing to the electric charge applied by the electrodes. Said electric charge gives rise to the mixing of materials and therefore the join between the two plates of material.

The material curves (elasticity and plasticity) applied are those that relate to each one of the zones that form the spot weld: base material zone, thermally affected zone and fusion zone. In the case of advanced high strength steels, specifically and by way of example that cannot be extrapolated to other high-strength steels, in the case of martensitic boron (22MnB5) steels the properties thereof (tested by means of customary strain tests) are applied to the base material. Curves dependent on the hardness measured at each spot are applied to the thermally affected zone and the properties of the base material are applied to the fusion zone as the hardnesses are very similar.

More particularly, the step of assigning a mechanical behaviour of the model of finite elements comprises assigning to the first base material of the first sheet the map of material corresponding to the first sheet, and to the second base material of the second sheet the map of material corresponding to the second sheet, such that each sheet is correctly characterized in accordance with the properties of its material. That is to say, its elasticity and plasticity behaviours, by way of example use could be made of the hardening curves of each material. Consequently, each material is modelled on the basis of information on its elastic model and elasticity parameters, its plasticity models and its hardening curve.

According to another aspect of the invention, the step of assigning a mechanical behaviour of the model of finite elements comprises assigning to the first thermally affected zone of the first sheet and to the second thermally affected zone of the second sheet a mechanical behaviour on the basis of a material and of a distance to the centre of the spot weld. This is so owing to the property gradient that exists in the vicinity of the spot weld, the properties of which vary to a greater or lesser degree because of the proximity to the hottest zone during the welding process. In cases where the material has a great variation in its properties in the thermally affected zone, models are used that introduce mechanical properties (hardening curves) dependent on the hardness of the zone in question. In this way, the zones of material are correctly characterized, on the basis of the material and the degree to which the zones are thermally affected.

According to yet another aspect of the invention, the step of assigning a mechanical behaviour of the model of finite elements comprises assigning to the fusion zone a strain-stress curve of the material. The fusion zone customarily has homogeneous properties, specifically those of a steel with the composition of the base material, but one which has melted and cooled very rapidly. Therefore, the properties of this zone have to be characterized either by using strain test microspecimens, in which only plastic deformations occur in the material of the fusion zone of the spot weld, or assuming that same has properties very similar to the base material (because both have received a similar thermal treatment) or performing the thermal treatment applied to the material of the fusion zone on the base material and subjecting it to a tensile force test in order to measure its properties. In this way, said fusion zone is characterized more precisely.

In a preferred embodiment of the invention, the step of determining the J-integral in at least one critical zone of the model of finite elements comprises determining a sector of the notch tip of the spot weld included in a critical section on the basis of the at least one applied load.

It should be stated that that which is sought is calculation of the J-integral only at the most critical section, with a view to predicting fracture with precision. This critical section may be sought empirically, performing calculations at all points of the perimeter of the notch tip and locating the maximum. Alternatively, this point can be ascertained in advance owing to the direction of application of forces, given that this information can give us an idea of which are the critical sections or cross sections for the purpose of determining the critical sector of the notch tip. It should be added that notch tip, or crack, is understood to mean the zone where one sheet is joined to the other. Specifically, this would be the zone of transition from air existing between the two sheets to the zone where there is already intermediate material as a result of the application of the spot weld.

According to another aspect of the invention, the step of modelling by means of finite elements comprises establishing a mesh of solid elements. Specifically, the finite elements have a three-dimensional hexahedric configuration with eight elements per node. Thus, the requirements of the present model are met in the sense that there is a sufficiently fine mesh for describing that the strain and stress fields converge.

More specifically, the step of modelling by means of finite elements comprises establishing a size of at least 0.1 mm in the finite elements of the first thermally affected zone of the first sheet, of the second thermally affected zone of the second sheet and of the fusion zone. This creates a mesh of finite elements representing, with sufficient precision, the geometry of a resistance spot weld. It should be pointed out, however, that the geometry of the spot weld is given by the thicknesses of the two joined sheets, which thicknesses are determined by the axes of the ellipse which, upon rotation on the minor axis thereof, form the geometry of the weld disc.

Additionally, the step of modelling by means of finite elements comprises establishing a size of at least 1.5 mm in the finite elements of the first base material of the first sheet of steel and of the second base material of the second sheet of steel. This optimizes available processing resources, minimizing the number of elements in the zone where there is no possibility of the crack existing and reducing the complexity of the finite element model used.

Furthermore, the step of applying boundary conditions comprises establishing a restriction of movement on the second sheet of steel, thus subjecting the zone under study to the required stresses.

According to another aspect of the invention, the method comprises a step of data output that in turn comprises providing a maximum load force and a displacement evolution during the application of the at least one load of the first sheet of steel joined to the at least one second sheet of steel by means of the at least one spot weld. Thus, in said step of entry of data, the evolution of the J-integral is represented, based on the force applied to the component. The value of the J-integral is compared with the critical value of the material. It is predicted that the join will fail when the J-integral reaches a critical value, known as "Fracture toughness", which is a property of the material in the fusion zone of the spot weld.

A further subject of the present invention is an electronic device configured in order to implement the spot weld fracture calculation method for high-strength steels according to the aforesaid.

The attached drawings show, by way of non-limiting example, a spot weld fracture calculation method for high-strength steels constituted in accordance with the invention. Further features and advantages of said spot weld fracture calculation method for high-strength steels, which is the subject of the present invention, will become evident on the basis of the description of a preferred, but non-exclusive, embodiment illustrated by way of non-limiting example in the accompanying drawings, wherein:

BRIEF DESCRIPTION OF THE DRAWINGS

Figure 1A.- Transverse section of a spot after fracture, in accordance with the present invention.

Figure 1B.- Transverse section of a spot after fracture, in accordance with the present invention.

Figure 1C.- This is a diagram of the section of the join between two sheets of the spot weld with different zones, in accordance with the present invention.

Figure 1D.- This is a graph representing the hardness of different steels as a function of the distance to the centre of the spot weld, in accordance with the present invention.

Figure 2.- This is a transverse section of the join between two sheets of the spot weld with the different zones, in accordance with the present invention.

Figure 3A.- This is a representation in perspective of the spot weld between two sheets with the different zones, in accordance with the present invention.

Figure 3B.- This is a representation in perspective of the join of two sheets, in accordance with the present invention.

Figure 3C.- This is a representation in perspective of the detail of the spot weld between two sheets, in accordance with the present invention.

Figure 4.- This is a lateral diagrammatic representation of different load situations on two sheets joined by a spot weld, in accordance with the present invention.

Figure 5A.- This is a representation in perspective of the join of two sheets, with a mesh of finite elements, in accordance with the present invention.

Figure 5B.- This is a representation in perspective of detail of the spot weld, in accordance with the present invention.

Figure 6A.- This is a graph representing the evolution of the J-integral evaluated at the critical section of the notch tip, in accordance with the present invention.

Figure 6B.- This is a graph representing the evolution of the displacement force curve for a case of load at 00 degrees, in accordance with the present invention.

Figure 6C.- This is a graph representing the evolution of the displacement force curve for a load case at 45 degrees, in accordance with the present invention.

Figure 7.- This is a graph representing a hardening curve.

Figure 8.- This is a diagram of different configurations of forces on two sheets joined by a spot weld, in accordance with the present invention.

DESCRIPTION OF A PREFERRED EMBODIMENT

In light of said figures and in accordance with the numbering adopted, it is possible to see therein a preferred exemplary embodiment of the invention, which comprises the parts and elements indicated and described in detail below.

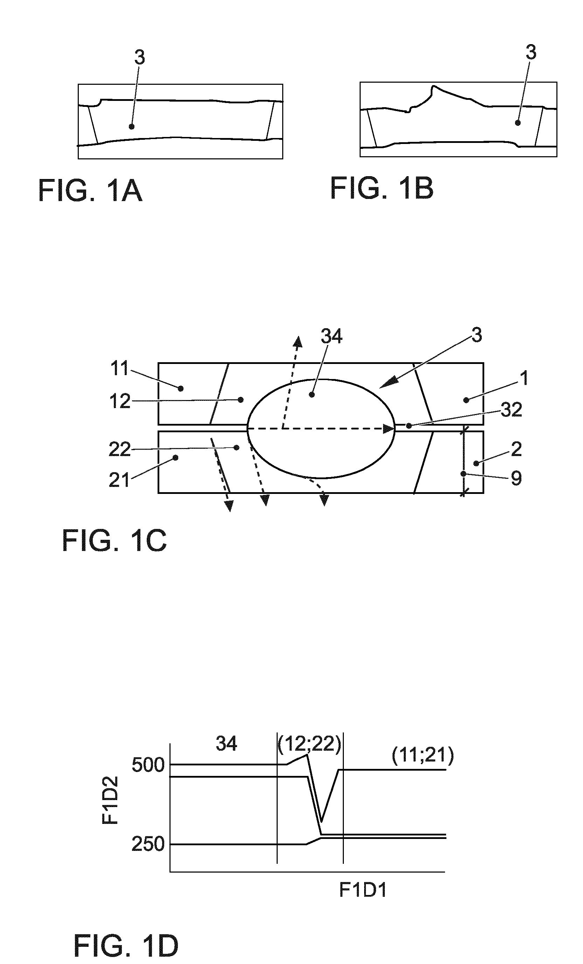

Thus, the present patent application makes it possible to provide a method for simulating and verifying the strength of spot welds in the event of a possible fracture at the zone of the adjacent discontinuous arrows or which traverse the fusion zone of the spot weld 3, as shown in Figure 1C.

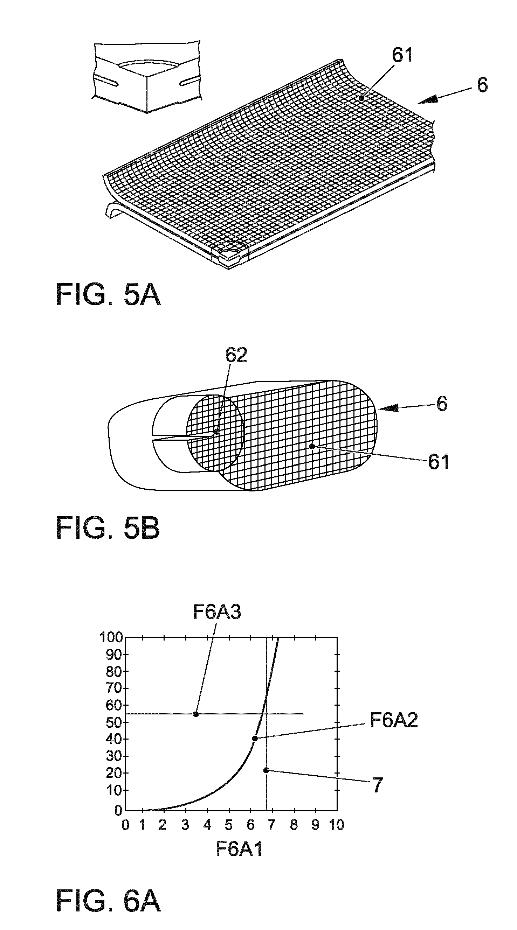

More specifically, as may be seen in Figures 5A, 5B and 6A, the invention offers a spot weld fracture calculation method for high-strength steels, wherein a first sheet 1 of steel with certain first mechanical properties is joined to at least one second sheet 2 of steel with certain second mechanical properties by means of at least one spot weld 3, wherein the at least one spot weld 3 is subject to at least one load 4, wherein the method comprises the steps of:

a) entering in a processing unit the at least certain mechanical properties of the first sheet 1 of steel, the at least certain second mechanical properties of the second sheet 2 of steel, certain thicknesses 9 of the first and the at least one second sheet 1, 2 of steel, a diameter 31 of the at least one spot weld 3 and an angle of application of the at least one load 4,

b) modelling the first sheet 1 of steel, the at least one second sheet 2 of steel and the at least one spot weld 3 by means of finite elements 61,

c) applying boundary conditions on the model of finite elements 61, wherein the boundary conditions are the at least one load 4 and at least one restriction of movement,

d) assigning a mechanical behaviour of the model of finite elements 61,

e) a first calculation step for determining certain strains of the finite elements 61, certain stresses of the finite elements 61 and the displacements of the nodes, a force curve of the first sheet 1, second sheet 2 and at least one spot weld 3 assembly, and a displacement of the first sheet 1, second sheet 2 and at least one spot weld 3 assembly,

f) a second calculation step for determining the J-integral in at least one critical zone of the model of finite elements 61 on the basis of the results obtained in the first calculation step,

g) storing J-integral values obtained in the second calculation step in a memory unit, and

h) judging a possibility of fracture of the at least one spot weld 4 on the basis of the stored J-integral values and a previously known maximum J-integral value.

In other words, the necessary boundary conditions are applied for representing the load on the join at points to be characterized, i.e. the loads applied to said join.

A quasi-static calculation of finite elements 61 is subsequently carried out, using commercial software, and the strains and stresses on the elements and also the applied force curve and displacement arising at the join are calculated. No fracture criterion is applied up to this point.

Additionally, the J-integral at the notch tip 32 generated around the spot weld 3 is calculated, with the strain, stress and displacement values obtained in the preceding calculation. It should be mentioned that it is possible to obtain the J-integral calculation integrated into certain commercial software (e.g. Abaqus). Given that the notch tip 32 has a circular form around the fusion zone 34, the J-integral has to be calculated in the section where its value is highest (see Figure 1 C).

The equation of the J-integral evaluation is as follows:

$$J_k = \int_\Gamma \left[ W n_k - \sigma_{ij} \frac{\partial u_i}{\partial x_k} n_j \right] dS, \qquad (1)$$

$$W = \int_0^\epsilon \sigma_{ij} d\varepsilon_{ij} = \int_0^t \sigma_{ij} \frac{d\varepsilon_{ij}}{dt} dt, \qquad (2)$$

wherein, in the cracked body, Γ is a path commencing at the lower face of the crack and ending in the upper face. Here, $n_i$ is the outward normal to Γ, $\sigma_{ij}$ the strain, $u_i$ the displacement, $d_s$ the increment of arc length along Γ and W the strain energy density defined by equation (2). The subindex $_k$ defines the coordinates of the crack tip coordinate system.

Integral J has to be evaluated in the first direction of advance of the notch tip 32 or crack. This first direction of advance will be that which is evaluated in the model of the present invention.

Thus, the J-integral is evaluated around the critical geometry of the notch tip 32. The maximum force is calculated by comparing the J-integral with the fracture toughness of the material. An example of maximum force 7 that the at least one assembly formed by a first sheet 1, a second sheet 2 and the at least one spot weld 3 is capable of withstanding is shown in Figure 6A, showing the evolution of the J-integral F6A2, the result obtained being said applicable maximum load force 7.

It should be mentioned, furthermore, that the complete process takes place automatically, and is preferably presented on a user-friendly interface.

It should be stated that the method is particularly designed for determining the strength of spot welds 3 used on high-strength steels. Such as, for example, a martensitic boron steel, 22MnB5 or Usibor 1500. As shown in Figure 1D, the behaviour of low-strength steels differs notably from advanced high-strength steels in the presence of at least one spot weld 3. Thus, the upper curve in Figure 1D corresponds to an advanced high-strength steel, such as a martensitic 22MnB5 steel. As observed, the hardness of the material is substantially equivalent in the fusion zone 34 and in the zone of base material 11, 21, which has not been thermally affected by the at least one spot weld 3. Therefore, the spot weld 3 is no longer the hardest and most rigid zone of the assembly, the base material 11, 21 also exhibiting certain very high mechanical properties. An example of said behaviour is that of DP600 dual-phase steel, which equates to the intermediate curve in Figure 1D. This shows that the fusion zone 34 exhibits very notable hardness in comparison with the hardness of the base material 11, 21. Consequently, the fracture upon application of a load 4 would never occur at the spot weld 3. It is thus understood that there is a need for a procedure that allows simulation of the behaviour for advanced high-strength steels.

More specifically, as may be seen in Figures 1C, 2, 3A, 3B and 3C, the first sheet 1 of steel is joined to a second sheet 2 of steel by means of at least one spot weld 3.

Therefore, as may be seen in Figures 1C, 2 and 3A, the step of assigning a mechanical behaviour of the model of finite elements 61 comprises a previous step of segmentation in at least one spot weld 3 in at least one first base material 11 of the first sheet 1 of steel, a second base material 21 of the second sheet 2 of steel, a first thermally affected zone 12 of the first sheet 1, a second thermally affected zone 22 of the second sheet 2 and a fusion zone 34.

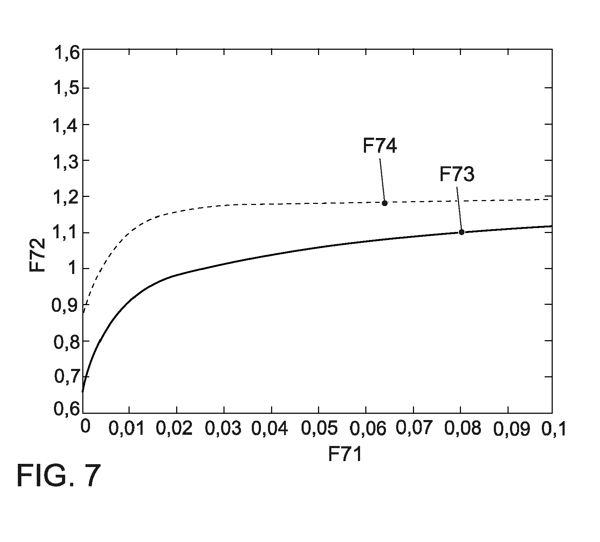

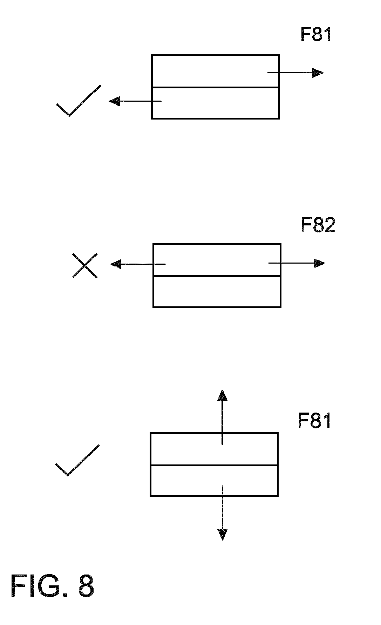

According to another aspect of the invention, as may be seen in Figures 7 and 8, the step of assigning a mechanical behaviour of the model of finite elements 61 comprises assigning, to the first base material 11 of the first sheet 1, the map of material 15 corresponding to the first sheet 11, and assigning, to the second base material 21 of the second sheet 2, the map of material 15 corresponding to the second sheet 2.

As an illustration of maps of materials known in the sector, we have the characteristic strain versus stress curves, such as the hardening curves of the zones of a spot weld 3, in DP 980 steel.

According to a preferred embodiment of the invention, the step of assigning a mechanical behaviour of the model of finite elements 61 comprises assigning to the first thermally affected zone 12 of the first sheet 1 and to the second thermally affected zone 22 of the second sheet 2 a mechanical behaviour on the basis of a material and of a distance to the centre of the spot weld 3.

It is observed that hardness is dependent on the distance to the spot weld 3 (in the thermally affected zone). However, each material has its own behaviour. Depending on the distance to the centre of the spot weld 3, the material will have a specific hardness. On the basis of this hardness, the strain/stress curves are sought, which strain corresponds to the hardness found. This characterizes the mechanical behaviour of the finite elements 61 that are in the thermally affected zone 12 or 22.

Additionally, as may be seen in Figures 7 and 8, the step of assigning a mechanical behaviour of the model of finite elements 61 comprises assigning, to the fusion zone 34, a strain/stress hardening curve of the material.

Said information is available through the specific tests on test specimens subjected to tensile forces, in which the central zone of the test specimen equates to the spot weld 3. Once the test specimen has been subjected to tensile forces, the hardening of the material of the "disc" or spot weld 3 is measured. Thus, said zone can be characterized and said information be made available in advance. Thus, as shown in a typical strain/stress curve shown in Figure 7, the evolution of yield strain with respect to plastic deformation in two different zones of a spot weld 3 is shown.

According to another aspect of the invention, the step of determining the J-integral in at least one critical zone of the model of finite elements 61 comprises determining a sector of the notch tip 32 of the spot weld 3 included in a critical section on the basis of the at least one applied load 4.

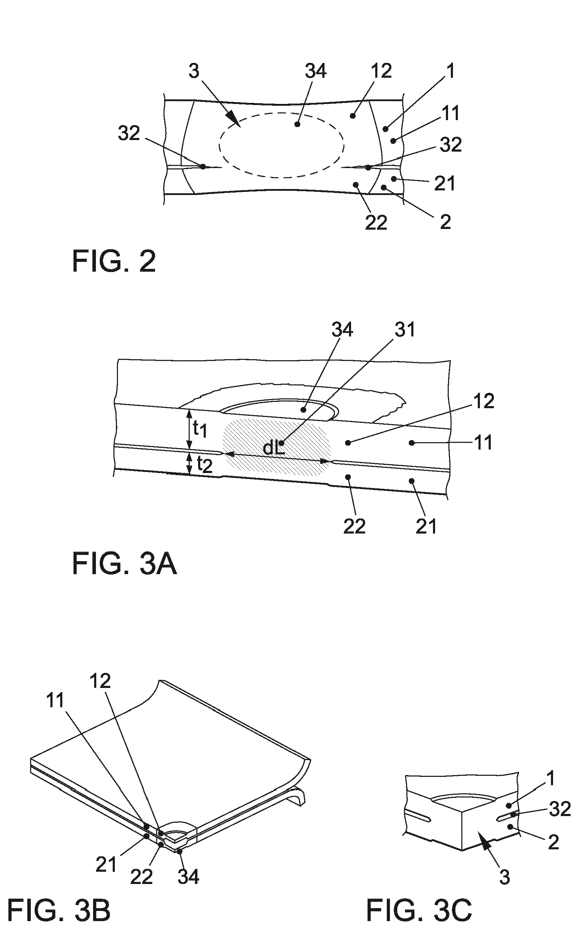

More particularly, as may be seen in Figures 3B, 3C, 5A and 5B, the step of modelling using finite elements 61 comprises establishing a mesh 6 of solid elements. Thus, as may be observed in greater detail in Figure 5A, a general diagram of grid or mesh 6 is established for the assembly, with finite elements 61 of larger size for modelling the first base material 11 or second base material 21 of the sheets and with finite elements 61 of smaller size for modelling the fusion zone 34 or thermally affected zone 12 or 22. In this zone, the mesh 6 will be refined in order to achieve greater precision in terms of the results obtained.

More specifically, as may be seen in Figure 5B, the step of modelling by means of finite elements 61 comprises establishing a size of at least 0.1 mm in the finite elements 61 of the first thermally affected zone 12 of the first sheet 1, of the second thermally affected zone 22 of the second sheet 2 and of the fusion zone 34.

Furthermore, as may be seen in Figure 5B, the step of modelling by means of finite elements 61 comprises establishing a size of at least 1.5 mm in the finite elements 61 of the first base material 11 of the first sheet 1 of steel and of the second base material 21 of the second sheet 2 of steel.

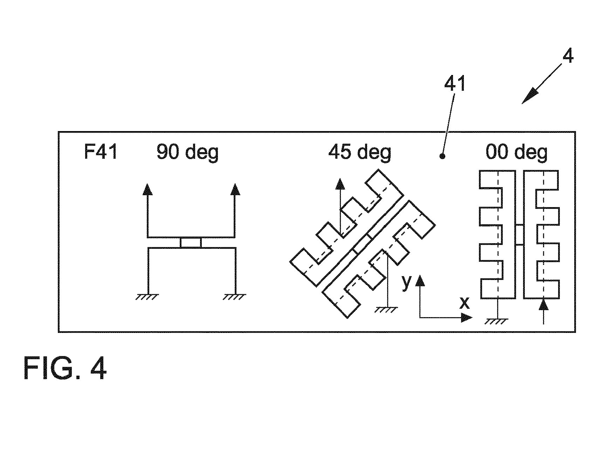

It should be mentioned that, as may be seen in Figures 4 and 8, the step of applying boundary conditions comprises establishing a restriction of movement on the second sheet 2 of steel. Furthermore, as may be seen in Figure 4, the tensile load most suited to the simulation carried out has to be applied. Thus, as shown by the aforesaid schematic representations of tests, there may be a situation of normal load 4, a mixed load or a transverse load applied to the first sheet 1 and second sheet 2. It is important to point out at this juncture that the present spot weld 3 fracture calculation method is valid only for situations of out-of-plane load 4 F81. Figure 8 shows the upper image and the lower image that show said situation of out-of-plane conditions. Consequently, the method of the present invention is not valid for in-plane load situations F82. Figure 8 shows the central image, which shows said situation of in-plane conditions F82.

According to a preferred embodiment of the invention, as may be seen in Figure 6A, the method comprises a step of data output that comprises providing a maximum load force 7 and a displacement evolution 8 during the application of the at least one load 4 of the first sheet 1 of steel joined to the at least one second sheet 2 of steel by means of the at least one spot weld 3.

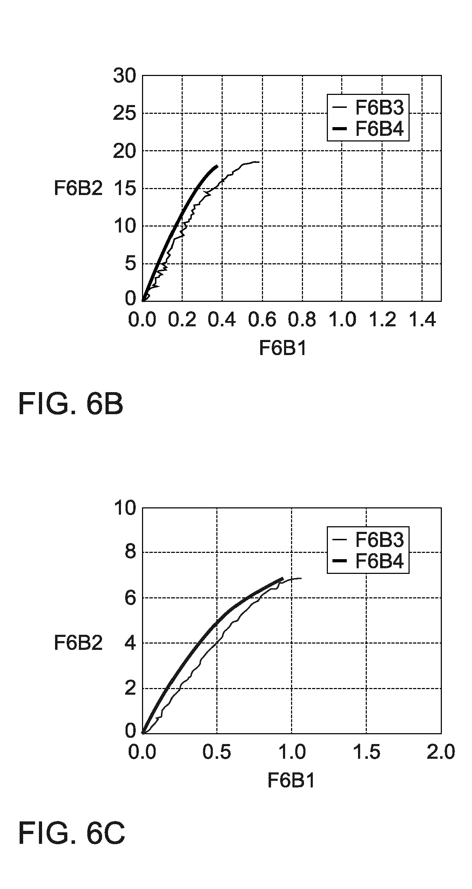

More specifically, in Figures 6B and 6C, it is possible to observe a comparison between a first simulated curve obtained using the method of the present invention and a second, experimental curve, which is the result of the step of entry of data. More specifically, Figure 6B shows a displacement force curve of a join via a spot weld 3, with a case of load 4 of 0 degrees. Furthermore, Figure 6C shows a displacement force curve of a join via a spot weld with a case of load 4 of 45 degrees. Both curves are represented up to the point of fracture or point of maximum load force 7. In order to correlate the present method, in the experimental curves of both figures the displacement between ends of the test specimen have been measured with digital image correlation (DIC), which makes it possible to measure the displacements effected more precisely. In the case of the simulated curves, the maximum load force 7 is extracted from the evolution of the J-integral in terms of the force applied, said maximum load force 7 being compared with the critical J-integral, according to the procedure of the present invention.

Additionally, the procedure of the present invention has been verified for different combinations of thicknesses of the first sheet 1 and the second sheet 2 and also different diameters 31 of the at least one spot weld 3. Likewise, verification of the procedure has been validated for a plurality of different situations of load 4.

A further subject of the invention is an electronic device configured in order to implement the spot weld fracture calculation method for high-strength steels according to the above description.

The details, the forms, the dimensions and other accessory elements, and also the components used in the implementation of the spot weld fracture calculation method for high-strength steels may be appropriately replaced by others that are technically equivalent and do not depart from the essential nature of the invention or the scope defined by the claims, which are included below in the following list.

**List of numerical references:**

| | |
|---|---|
| 1 | first sheet |
| 11 | first base material |
| 12 | first thermally affected zone |
| 15 | map of material 2 second sheet |
| 21 | second base material |
| 22 | second thermally affected zone |
| 3 | spot weld |

31      diameter
32      notch tip
34      fusion zone
4       load
41      angle of load
5       curve of material 6 mesh
61      finite elements
62      node
7       load force {maximum}
8       displacement evolution
9       thickness

**List of references used as abbreviations from the text within the figures**

F1 D1      Distance from the centre of the spot weld
F1 D2      Hardness (Vickers microhardness HV)
F41        Angle of load
F6A1       Applied force
F6A2       Evolution of the J-integral
F6A3       Critical value of the J-integral
F6B1       Displacement
F6B2       Force
F6B3       Experiment
F6B4       Simulation
F71        True plastic stress
F72        True strain
F73        Base material
F74        Spot weld material or "disc"
F81        Out-of-plane
F82        In-plane

**Claims**

1.  Spot weld fracture calculation method for high-strength steels,
    wherein a first sheet (1) of steel with certain first mechanical properties is joined to at least one second sheet (2) of steel with certain second mechanical properties by means of at least one spot weld (3), wherein the at least one spot weld (3) is subject to at least one load (4), **characterized in that** it comprises the steps of:

    a) entering in a processing unit the at least certain mechanical properties of the first sheet (1) of steel, the at least certain second mechanical properties of the second sheet (2) of steel, certain thicknesses (9) of the first and the at least one second sheet (1, 2) of steel, a diameter (31) of the at least one spot weld (3) and an angle of application of the at least one load (4),
    b) modelling the first sheet (1) of steel, the at least one second sheet (2) of steel and the at least one spot weld (3) by means of finite elements (61),
    c) applying boundary conditions on the model of finite elements (61), wherein the boundary conditions are the at least one load (4) and at least one restriction of movement,
    d) assigning a mechanical behaviour of the model of finite elements (61),
    e) a first calculation step for determining certain strains of the finite elements (61), certain stresses of the finite elements (61) and the displacements of the nodes, a force curve of the first sheet (1), second sheet (2) and at least one spot weld (3) assembly, and a displacement of the first sheet (1), second sheet (2) and at least one spot weld (3) assembly,
    f) a second calculation step for determining the J-integral in at least one critical zone of the model of finite elements (61) on the basis of the results obtained in the first calculation step,
    g) storing J-integral values obtained in the second calculation step in a memory unit, and
    h) judging a possibility of fracture of the at least one spot weld (3) on the basis of the stored J-integral values and a previously known maximum J-integral value.

2. Spot weld fracture calculation method for high-strength steels according to Claim 1, **characterized in that** the first sheet (1) of steel is joined to a second sheet (2) of steel by means of at least one spot weld (3).

3. Spot weld fracture calculation method for high-strength steels according to Claim 1, **characterized in that** the step of assigning a mechanical behaviour of the model of finite elements (61) comprises a previous step of segmenting the at least one spot weld (3) into at least a first base material (11) of the first sheet (1) of steel, a second base material (21) of the second sheet (2) of steel, a first thermally affected zone (12) of the first sheet (1), a second thermally affected zone (22) of the second sheet (2) and a fusion zone (34).

4. Spot weld fracture calculation method for high-strength steels according to Claim 3, **characterized in that** the step of assigning a mechanical behaviour of the model of finite elements (61) comprises assigning to the first base material (11) of the first sheet (1) the map of material (15) corresponding to the first sheet (11), and to the second base material (21) of the second sheet (2) the map of material (15) corresponding to the second sheet (2).

5. Spot weld fracture calculation method for high-strength steels according to Claim 3, **characterized in that** the step of assigning a mechanical behaviour of the model of finite elements (61) comprises assigning to the first thermally affected zone (12) of the first sheet (1) and to the second thermally affected zone (22) of the second sheet (2) a mechanical behaviour on the basis of a material and of a distance to the centre of the spot weld (3).

6. Spot weld fracture calculation method for high-strength steels according to Claim 3, **characterized in that** the step of assigning a mechanical behaviour of the model of finite elements (61) comprises assigning to the fusion zone (34) a strain-stress curve of the material.

7. Spot weld fracture calculation method for high-strength steels according to Claim 1, **characterized in that** the step of determining the J-integral in at least one critical zone of the model of finite elements (61) comprises determining a sector of the notch tip (32) of the spot weld (3) included in a critical section on the basis of the at least one applied load (4).

8. Spot weld fracture calculation method for high-strength steels according to Claim 1, **characterized in that** the step of modelling by means of finite elements (61) comprises establishing a mesh (6) of solid elements.

9. Spot weld fracture calculation method for high-strength steels according to Claim 3, **characterized in that** the step of modelling by means of finite elements (61) comprises establishing a size of at least 0.1 mm in the finite elements (61) of the first thermally affected zone (12) of the first sheet (1), of the second thermally affected zone (22) of the second sheet (2) and of the fusion zone (34).

10. Spot weld fracture calculation method for high-strength steels according to Claim 3, **characterized in that** the step of modelling by means of finite elements (61) comprises establishing a size of at least 1.5 mm in the finite elements (61) of the first base material (11) of the first sheet (1) of steel and of the second base material (21) of the second sheet (2) of steel.

11. Spot weld fracture calculation method for high-strength steels according to Claim 1, **characterized in that** the step of applying boundary conditions comprises establishing a restriction of movement on the second sheet (2) of steel.

12. Spot weld fracture calculation method for high-strength steels according to Claim 1, **characterized in that** it comprises a step of data output that comprises providing a maximum load force (7) and a displacement evolution (8) during the application of the at least one load (4) of the first sheet (1) of steel joined to the at least one second sheet (2) of steel by means of the at least one spot weld (3).

13. Electronic device configured in order to implement the spot weld fracture calculation method for high-strength steels according to Claims 1 to 12.

**FIG. 1A**

**FIG. 1B**

**FIG. 1C**

**FIG. 1D**

3  34  12  1
11
32  32
21
22  2

# FIG. 2

34  31
12
11
$t_1$  dL
$t_2$
22  21

# FIG. 3A

12
11
21  22  34

# FIG. 3B

1
32
2
3

# FIG. 3C

FIG. 4

FIG. 5A

FIG. 5B

FIG. 6A

## FIG. 6B

## FIG. 6C

FIG. 7

FIG. 8

Europäisches
Patentamt

European
Patent Office

Office européen
des brevets

# EUROPEAN SEARCH REPORT

Application Number

EP 16 38 2250

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | S Burget ET AL: "Characterization and modeling of fracture behavior of spot welded joints in hot-stamped ultra-high strength steels", 11th LS-DYNA Forum 2012, 2012, pages 1-10, XP055314321, Retrieved from the Internet: URL:https://www.dynamore.de/de/download/pa pers/ls-dyna-forum-2012/documents/crash-4-3 [retrieved on 2016-10-26] * abstract * * figures 1, 2, 5-15 * * sections 2, 5 and 6 * | 1-13 | INV. G06F17/50 G01N3/00 B23K11/11 |
| Y | DANCETTE S ET AL: "A finite element model for the prediction of Advanced High Strength Steel spot welds fracture", ENGINEERING FRACTURE MECHANICS, PERGAMON PRESS, NEW YORK, NY, GB, vol. 87, 10 March 2012 (2012-03-10), pages 48-61, XP028485695, ISSN: 0013-7944, DOI: 10.1016/J.ENGFRACMECH.2012.03.004 [retrieved on 2012-03-21] * section 2.2.1 * * figure 9 * | 1-13 | |
| | ----- | | TECHNICAL FIELDS SEARCHED (IPC) |
| | -/-- | | G06F B23K G01N |

The present search report has been drawn up for all claims

| Place of search | Date of completion of the search | Examiner |
|---|---|---|
| Munich | 28 October 2016 | Alexe, Mihai |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

page 1 of 2

Europäisches
Patentamt

European
Patent Office

Office européen
des brevets

# EUROPEAN SEARCH REPORT

Application Number

EP 16 38 2250

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| A | UC Boulder:  "FEM Modeling: Mesh, Loads and BCs", , 9 September 2015 (2015-09-09), pages 1-19, XP055314724, Retrieved from the Internet: URL:http://www.colorado.edu/engineering/CAS/courses.d/IFEM.d/IFEM.Ch07.d/IFEM.Ch07.pdf [retrieved on 2016-10-27] * figures 7.5,7.12 * ----- | 1,11 | |
| A,D | EP 1 742 033 A1 (NIPPON STEEL CORP [JP]) 10 January 2007 (2007-01-10) * the whole document * ----- | 1-13 | |
| A,D | EP 1 777 509 A2 (TOYOTA MOTOR CO LTD [JP]) 25 April 2007 (2007-04-25) * the whole document * ----- | 1-13 | |
| | | | TECHNICAL FIELDS SEARCHED      (IPC) |

The present search report has been drawn up for all claims

| Place of search | Date of completion of the search | Examiner |
|---|---|---|
| Munich | 28 October 2016 | Alexe, Mihai |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 252 627 A1**

## ANNEX TO THE EUROPEAN SEARCH REPORT
## ON EUROPEAN PATENT APPLICATION NO.

EP 16 38 2250

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2016

| Patent document cited in search report | | | Publication date | Patent family member(s) | | | Publication date |
|---|---|---|---|---|---|---|---|
| EP 1742033 | A1 | | 10-01-2007 | CA | 2562590 | A1 | 27-10-2005 |
| | | | | CN | 1942750 | A | 04-04-2007 |
| | | | | EP | 1742033 | A1 | 10-01-2007 |
| | | | | JP | 4150383 | B2 | 17-09-2008 |
| | | | | JP | 2005326401 | A | 24-11-2005 |
| | | | | KR | 20060135878 | A | 29-12-2006 |
| | | | | RU | 2370746 | C2 | 20-10-2009 |
| | | | | US | 2007199924 | A1 | 30-08-2007 |
| | | | | WO | 2005100949 | A1 | 27-10-2005 |
| EP 1777509 | A2 | | 25-04-2007 | EP | 1777509 | A2 | 25-04-2007 |
| | | | | JP | 4165551 | B2 | 15-10-2008 |
| | | | | JP | 2007114046 | A | 10-05-2007 |
| | | | | US | 2007090165 | A1 | 26-04-2007 |

EPO FORM P0459

For more details about this annex : see Official Journal of the European Patent Office, No. 12/82

**REFERENCES CITED IN THE DESCRIPTION**

**Patent documents cited in the description**

- EP 1742033 A
- EP 1777509 A